# EUROPÄISCHE PATENTSCHRIFT

(11) **EP 0 464 651 B1**
(45) Veröffentlichungstag und Bekanntmachung des Hinweises auf die Patenterteilung: **18.05.1994**
(21) Anmeldenummer: 91110596.3
(22) Anmeldetag: 26.06.1991
(51) Int. Cl.: A01F 15/14

(54) **Grossballenpresse**
Large bale press
Presse pour grandes balles

(30) Priorität: 27.06.1990 DE 4020497
(43) Veröffentlichungstag der Anmeldung: 08.01.1992
(73) Patentinhaber: GREENLAND GMBH & CO. KG, D-78244 Gottmadingen (DE)
(72) Erfinder: Schaible, Siegfried, Dipl.-Ing., W-7700 Singen (DE); Wölfle, Hans Peter, W-7702 Gottmadingen (DE)
(74) Vertreter: Grünecker, Kinkeldey, Stockmair & Schwanhäusser Anwaltssozietät

(56) Entgegenhaltungen:
- EP-A- 0 084 680
- EP-A- 0 199 615
- GB-A- 2 028 220
- US-A- 3 214 205
- US-A- 4 765 235

## Beschreibung

Die Erfindung betrifft eine Großballenpresse der im Oberbegriff des Patentanspruchs 1 angegebenen Art.

Großballen werden zur Rationalisierung der Futterernte gegenüber früher zunehmend größer, z.B. 0,60 m hoch, 1,20 m breit und zwischen 1,20 und 2,80 m lang. Jeder Großballen wird in mehrere parallele Garnschlaufen eingeknüpft. Jede Garnschlaufe wird gebildet, indem das Garn zwischen dem Garnvorrat und der Zuführnadel an einer Seite des Preßkanals und der Knüpfvorrichtung an der anderen Seite des Preßkanals gehalten wird, ehe der im Entstehen begriffene Großballen durch den Preßkanal geschoben wird und das Garn vom Vorrat ab- und nachzieht. Infolge der Reibung an den Oberflächen des Großballens steigt im von der Knüpfvorrichtung gehaltenen Garnabschnitt die Spannung stark an, so daß die Knüpfvorrichtung beim Knotenbilden hoch, z.B. mit 1500 N, belastet wird. Wegen der hohen Preßdichte und der Abmessungen der Großballen wird ferner ein relativ dickes Garn mit einer Lauflänge von 150 oder 160 m/kg verwendet, dessen Dicke im Knoten zusätzliche Garnlänge beansprucht und zur zusätzlichen Erhöhung der Garnspannung führt. Aus der beim Knotenbilden auf der Knüpfvorrichtung lastenden Kraft aufgrund der Garnspannung resultieren starker Verschleiß in der Knüpfvorrichtung und deren Lagerung und der Nachteil, daß die Knüpfvorrichtung das belastete Garnende beim Knotenbilden nicht zuverlässig festzuhalten vermag, wodurch die Quote fehlerhafter Knoten hoch ist.

Bei einer aus EP-A1-0 199 615 bekannten Großballenpresse ist ein oberhalb der Knüpfvorrichtung schwenkbar gelagerter Hebel mit einem untenliegenden Querarm vorgesehen, der bei der Schwenkung des Hebels zwischen der Oberseite des Großballens und der Unterseite der Knüpfvorrichtung verstellbar ist. In der garnvorratsbildenden Stellung des Hebels befindet sich der Querarm nahe an der Bewegungsbahn der Zuführnadel. Der weitere Garnabschnitt erstreckt sich unter der Knüpfvorrichtung vorbei, von unten um den Querarm herum und dann zur Garnhalterung der Knüpfvorrichtung. Der Messerhebel ist dabei funktionslos, da der Endabschnitt des weiteren Garnabschnitts zwischen dem Querarm und der Garnhalterung gestreckt und aus der gabelförmigen Öffnung des Messerhebels ausgehoben ist. Das andere Garnende wird dann von der Zuführnadel ebenfalls über den Querarm der Garnhalterung angeboten, wobei es ebenfalls aus der Gabelöffnung des Messerhebels ausgehoben bleibt. Kurz bevor der Knüpferhaken der Knüpfvorrichtung zur Knotenbildung gedreht wird, schwenkt der Hebel mit seinem Querarm unter den Messerhebel. Der weitere Garnabschnitt und das andere Garnende werden entspannt und legen sich locker in die Gabelöffnung des Messerhebels. Dann formt der Knüpferhaken den Knoten, worauf mittels des Messerhebels beide in der Garnhalterung gehaltenen Garnenden abgetrennt und der Knoten vom Knüpferhaken seitlich abgeworfen wird. Beim Knotenbilden und beim seitlichen Abwerfen des Knotens wird der weitere Garnabschnitt relativ zum Messerhebel durch einen an der Unterseite des Querarms angeordneten Finger seitlich verlagert. Unter den unvermeidbar groben Arbeitsbedingungen beim Aufbauen des Großballens und bis zum Knotenbilden besteht die Gefahr, daß zumindest der weitere Garnabschnitt, der bei den Ballenbewegungen schrittweise gespannt wird und sich beim Schwenken des Hebels in die Entlastungsstellung ruckartig entspannt, seitlich verrutscht und im Messerhebel nicht mehr ordnungsgemäß für den Knüpferhaken positioniert bleibt. Die Folge einer solchen Fehlpositionierung kann ein fehlerhafter Knoten sein. Ferner wird für den Hebel und den Querarm ein relativ großer Bewegungsbereich benötigt, der unter den üblicherweise beschränkten Platzverhältnissen im Bereich der Knüpfvorrichtung baulich schwierig zu realisieren ist.

Bei einer aus US-A-4 765 235 bekannten Großballenpresse sind außerhalb der den Großballen einschließenden Garnschlaufe und hinter der Knüpfvorrichtung die Garnspannung beeinflussende Hebelmechanismen vorgesehen. Diese haben auf die Spannung in der den Großballen einschließenden Schlaufe keinen spürbaren Einfluß.

Bei einer aus EP-A1-0 084 680 bekannten Großballenpresse wird jeder Großballen in eine Drahtschlinge gepreßt, deren Enden mittels eines Verschnürkopfes verdrillt werden.

Bei einer aus GB-A-2 028 220 bekannten Ballenpresse ist jeweils ein Garnpreßhebel drehbar unterhalb der Knüpfvorrichtung vorgesehen, der das Garn in den Arbeitsbereich des Knüpfers bringt und in die Knüpfkammer eindringende Fremdkörper beiseite schiebt. In der Decke des Preßkanals sind längsliegende Führungsschienen vorgesehen, die in den Preßkanal und in die Oberfläche des Großballens eingreifen.

Der Erfindung liegt die Aufgabe zugrunde, eine Großballenpresse der eingangs genannten Art zu schaffen, die sich durch eine einfache und platzsparend ausgebildete Vorrichtung zum Bilden eines Garnvorrats auszeichnet und zuverlässig eine hohe Knotenqualität ermöglicht.

Die gestellte Aufgabe wird bei einer Großballenpresse der eingangs genannten Art mit den im kennzeichnenden Teil des Patentanspruchs 1 enthaltenen Merkmalen gelöst.

Da die vorratsbildende Vorrichtung derart beweglich angeordnet ist, daß der weitere Garnabschnitt permanent im Messerhebel geführt und abgestützt ist, wenn ein Garnvorrat gebildet und vor dem Knotenbilden der weitere Garnabschnitt durch Freigeben des Garnvorrats entspannt wird, bleibt die korrekte Positionierung des Garns für den Knüpferhaken ungeachtet der Vorratsbildung und der Entlastung des weiteren Garnabschnitts aufrechterhalten. Das permanent gestützte und geführte Garn kann seitlich nicht wegrutschen. Die Knotenqualität ist hoch, weil der Knüpferhaken stets unter den gleichen, optimalen Bedingungen arbeitet, wobei die beim Freigeben des Garnvorrats für die Knotenbildung verringerte Garnspannung zur gleichbleibend hohen Knotenqualität auch bei großen Ballen und relativ starkem Garn beiträgt. Die Quote aus der Garnhalterung herausgezogener Enden schlechter Knoten wird spürbar reduziert. Eine Verbesserung der Knotenqualität und eine Verschleißminderung bei der Knüpfvorrichtung werden bereits erreicht, wenn durch den gebildeten Garnvorrat ca. 1/3 der ansonsten entstehenden Garnspannung abgebaut wird.

Bei der Ausführung gemäß Anspruch 2 wird zur Bildung des Garnvorrats der Preßkanal bzw. ein Teil des von dem Großballen beanspruchten Raums im Preßkanal genutzt. Dadurch ergibt sich ein wünschenswert geringer Platzbedarf für die Garnvorratsbildung. Die Verstellung des Umlenkelementes in die Entlastungsstellung erfolgt in Abhängigkeit von der Betätigung der Knüpfvorrichtung oder in Abhängigkeit von einem vorgewählten Garnspannungswert. Die Vorrichtung läßt sich ohne nennenswerte Modifikation der Großballenpresse nachträglich in eine bereits benutzte Großballenpresse einbauen, um die Knotenqualität zu verbessern und den Verschleiß der Knüpfvorrichtung zu mindern.

Bei der Ausführungsform gemäß Anspruch 3 hat die Knüpfvorrichtung eine Doppelfunktion, da sie sowohl zum Knotenbilden als auch zum Vorratsbilden eingesetzt wird. Diese Ausführungsform benötigt ebenfalls wenig Platz. Der Messerhebel behält seine Führungs- und Abstützungsfunktion permanent, damit das Garn nicht seitlich wegrutscht.

Bei der Ausführungsform gemäß Anspruch 4 wird für den Bewegungshub des Umlenkelement der Nut-Formkanal und die Tiefe des Nut-Formkanals genutzt. Dabei bleibt das Garn permanent vom Messerhebel gegen seitliches Ausweichen abgestützt und geführt.

Bei der Ausführungsform gemäß Anspruch 5 wird die Kollisionsgefahr zwischen dem Umlenkelement, dem Garn und dem Halmgut im Großballen gemindert.

Bei der Ausführungsform gemäß Anspruch 6 zieht die Knüpfvorrichtung bei ihrer Verschiebebewegung das Garn im weiteren Garnabschnitt vor dem Knotenbilden um ein bestimmtes Maß entgegen der Preßrichtung. Erst unmittelbar vor dem Knotenbilden wird die Knüpfvorrichtung in die Knotenbildestellung zurückgeschoben, um den Fadenvorrat freizugeben und den Knoten zu bilden. Das Garn wird nicht nennenswert ausgelenkt, so daß zur Vorratsbildung wenig Platz benötigt wird.

Bei der Ausführungsform gemäß Anspruch 7 wird die Knüpfvorrichtung oder zumindest deren Garnhalterung zur Garnvorratsbildung um eine Achse verschwenkt, die zweckmäßigerweise mit der Antriebswelle der Knüpfvorrichtung zusammenfällt.

Bei der Ausführungsform gemäß Anspruch 8 dient als Stellelement ein pneumatischer oder hydraulischer Stellzylinder, der eine feinfühlige und exakt steuerbare Bewegung der Knüpfvorrichtung bzw. der Garnhalterung ermöglicht.

Die Ausführungsform gemäß Anspruch 9 ist vorteilhaft, weil die Knüpfvorrichtung in der jeweiligen Endstellung stabil abgestützt ist. Eine individuelle Anpassung an unterschiedliche Bedingungen, z.B. verschiedene Ballenlängen, ist durch Einstellen der Anschläge für den Bewegungsbereich möglich.

Bei der Ausführungsform gemäß Anspruch 10 wird ein Garnvorrat platzsparend mit einer zick-zack-förmigen Umlenkung des Garns hergestellt. Dies kann vorteilhaft sein, wenn der durch das in die Oberfläche des Großballens eintauchende Umlenkelement oder durch die Knüpfvorrichtung gebildete Fadenvorrat noch nicht zur ausreichenden Entspannung des Garnes reichen sollte. Bei der zick-zack-förmigen Umlenkung wird sehr wenig Platz benötigt.

Zweckmäßig ist schließlich die Ausführungsform gemäß Anspruch 11, weil ein relativ großer Garnvorrat bei geringem Platzbedarf gebildet wird, wenn sich die Garnanschläge und der Schieber gegensinnig bewegen.

Anhand der Zeichnungen werden Ausführungsformen des Erfindungsgegenstandes erläutert. Es zeigen:

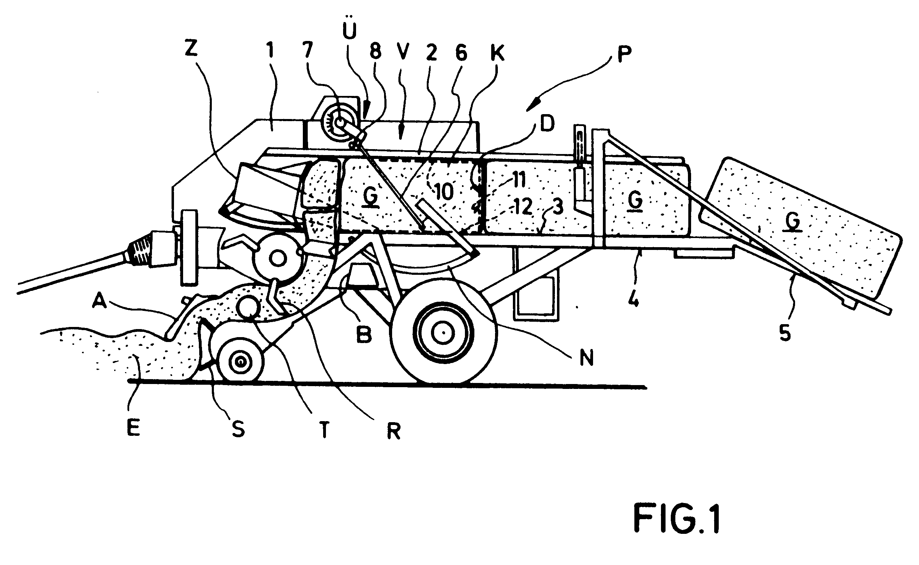

- Fig. 1: einen schematischen Längsschnitt einer Großballenpresse,
- Fig. 2: eine erste Ausführungsform eines Details, im Längsschnitt,
- Fig. 3: eine zweite Ausführungsform eines Details, im Längsschnitt,
- Fig. 4: eine dritte Ausführungsform eines Details, in einem Horizontalschnitt.

Eine von einem Schlepper (nicht gezeigt) ziehbare und antreibbare Großballenpresse P stellt aus geschnittenem Futtergut E quaderförmige Großballen G her, die beispielsweise Abmessungen von 0,60/1,20/1,20-2,80 m (H/B/L) haben. Die Presse P weist einen Aufnahmeteil A mit einer Pick-up- Walze S und seitlichen Formschnecken T auf. Eine Flügelwalze R fördert das Erntegut von unten her in einen Preßkanal K, in dem ein Preßkolben Z taktweise verdichtet. Jeder Großballen G wird in mehrere, z.B. fünf, Garnschlaufen D eingeknüpft, ehe er rückwärts ausgegeben wird. Zu diesem Zweck ist im Fahrgestell ein Vorrat eines Garns B angeordnet, von dem aus das Garn durch die Spitze einer gebogenen Zuführnadel N und dann nach oben quer über den Preßkanal K bis zu einer Knüpfvorrichtung Ü läuft, die eine nicht dargestellte Halterung für das freie Garnende enthält.

Für jede Garnschlaufe D ist ein eigener Vorrat, eine Zuführnadel N und eine Knüpfvorrichtung Ü vorgesehen. Die Knüpfvorrichtungen Ü befinden sich in einem Oberteil 1 der Großballenpresse P. Der Preßkanal K wird oben und unten durch Wände 2, 3 begrenzt. Die untere Wand 3 ist bei 4 verlängert und mit einer Ablegevorrichtung 5 für die fertigen und eingeknüpften Großballen G verbunden. Die Zuführnadeln sind über einen Lenker 6 mit den Knüpfvorrichtungen Ü bewegungsgekoppelt, die auf einer Antriebswelle 7 im Oberteil 1 sitzen und jeweils einen Knüpferhaken 8 enthalten.

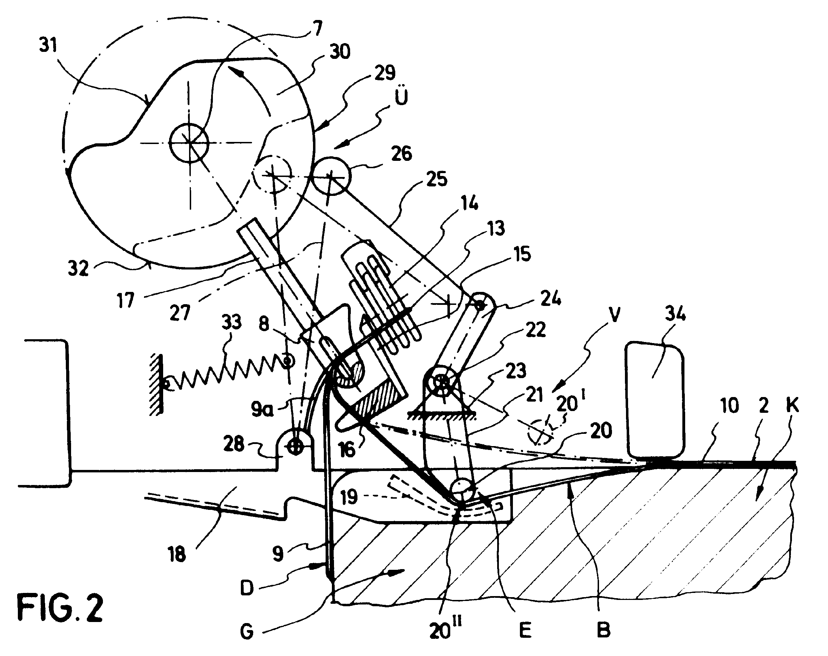

Bei den Knüpfvorrichtungen Ü sind im Detail aus den Figuren 2 bis 4 entnehmbare Vorrichtungen V zum vorübergehenden Bilden eines Garnvorrats im jeweils oberen, weiteren Garnabschnitt 10 jeder Garnschlaufe D vorgesehen. Der weitere Garnabschnitt 10 erstreckt sich von der in Preßrichtung vorneliegenden Kante des Großballens G bis zur Knüpfvorrichtung Ü. Der sich entlang der in Preßrichtung vorderen Stirnseite erstreckende Garnteil ist mit 11 angedeutet. Der entlang der unteren Wand 3 des Preßkanals von der in Preßrichtung vorneliegenden Unterkante des Großballens G bis zur Zuführnadel N bzw. zum Vorrat verlaufende Teil der Schlaufe D ist mit 12 bezeichnet.

Die Garnschlaufe D wird dadurch gebildet, daß der im Entstehen begriffene Großballen vorwärtsgeschoben wird und dabei das Garn mitnimmt, das aus dem Vorrat abläuft. Nach Abschluß des Preßvorganges und während der Kolben Z zurückgezogen wird, überführt die Zuführnadel N einen weiteren Teil 9 (Fig.2) des Garns zur Knüpfvorrichtung Ü, deren Halterung 14 das Garn festhält, ehe der Knüpferhaken 8 einen Knoten bildet, der nach dem Abschneiden der Garndenden abgeworfen wird. Das neue Garnende wird wieder in der Halterung festgehalten.

Die Knüpfvorrichtung Ü ist z.B. eine "Deering-Knüpfvorrichtung" bekannter Bauart.

In Figur 2 ist schematisch das hintere, obere Ende des Großballens G im Preßkanal K erkennbar. Das mit 13 bezeichnete freie Ende des weiteren Garnabschnittes 10 ist zusammen mit dem freien Ende des Garnabschnittes 9 in der Halterung 14 festgelegt. Für den nächstkommenden Großballen hängt ein Garnteil 9a aus der Knüpfvorrichtung Ü quer durch den Preßkanal nach unten. In der Knüpfvorrichtung Ü ist zwischen dem Knüpferhaken 8 und der Halterung 14 ein Messer 15 an einem Messerhebel 16 gehalten, der gabelartig ausgebildet ist und eine Abstützung und Führung für den weiteren Garnabschnitt 10 bildet. Der Knüpferhaken 8 ist an einer schrägstehenden Welle 17 befestigt, die über einen nicht dargestellten Antrieb mit der Antriebswelle 7 koppelbar ist, um während einer 360°-Drehung einen Knoten zu bilden und abzuwerfen. In der oberen Wand 2 des Preßkanals K sind der Anzahl der Garnschlaufen D entsprechend viele Nutformkanäle 18 angebracht, die in die Oberfläche des Großballens G eingreifen und Nuten für die Garnschlaufen D formen. Der Kanal 18 ist nach unten offen und innen mit einem abgewinkelten Abweiser 19 ausgestattet.

Die Vorrichtung V weist ein Umlenkelement E in Form eines Querzapfens 20 auf, der an einem Arm 21 einer in einem Lager 23 stationär gelagerten Welle 22 angebracht ist. An der Welle 22 ist ferner ein Schwinghebel 24 nach oben ragend befestigt, der über einen Lenker 25 mit einem Nockenfolgeglied 26 gekoppelt ist, das sich am freien Ende eines Hebels 27 befindet. Der Hebel 27 ist in einem Lager 28 schwenkbar gelagert und wird durch eine Feder 33 in Figur 2 entgegen dem Uhrzeigersinn beaufschlagt. Das Nockenfolgeglied 26 wird an eine Nockenbahn 29 einer Nockenscheibe 30 angedrückt, die auf der Antriebswelle 7 befestigt ist.

Die Nockenbahn 29 besteht aus zwei Abschnitten 31, 32, wobei der Abschnitt 31 der Entlastungsstellung 20^{I} des Umlenkelementes E und der Abschnitt 32 einer Umlenkstellung 20^{II} des Umlenkelementes E entspricht. In ausgezogenen Linien sind die einzelnen Komponenten der Vorrichtung V in der Umlenkstellung gezeigt, während strichpunktiert angedeutet ist, welche Positionen die einzelnen Komponenten in der Entlastungsstellung des Umlenkelementes E einnehmen. Über eine 360°-Drehung der Antriebswelle 7 gibt es eine Entlastungsstellung und über einen größeren Drehbereich eine Umlenkstellung. In der Umlenkstellung taucht das Umlenkelement E bis ins Innere des Nutformkanals 18 und drückt von oben auf den Garnabschnitt 10. Dieser wird aus seiner normalen Richtung ausgelenkt, die er normalerweise zwischen dem Messerhebel 16 und der in Preßrichtung vorderen Oberkante des Großballens G einnehmen würde. Mit 34 ist ein Querträger der oberen Wand 2 des Preßkanals K angedeutet. Durch die Auslenkung des weiteren Garnabschnittes 10 wird ein Garnvorrat (z.B. ca 3-6 cm) gebildet, der zum Knotenbilden zur Verfügung gestellt wird, um die Garnspannung im weiteren Garnabschnitt 10 zu verringern. Der gabelförmige Messerhebel 16 stützt und führt den weiteren Garnabschnitt 10 bis zum Abwerfen des Knotens vom Knüpferhaken 8, so daß der weitere Garnabschnitt unter den ruckartigen Bewegungen beim Spannen und auch bei der schlagartigen Entspannung vor dem Knotenbilden nicht seitlich ausweicht und einen Knotenfehler hervorruft.

Solange der Knüpferhaken 8 in der dargestellten Position gemäß Figur 2 steht, bleibt das Umlenkelement E in der Umlenkstellung (20^{II}). Sobald nach Abschluß des Preßvorganges begonnen wird, den Knüpferhaken 8 durch Antreiben der Welle 17 zu verdrehen, gelangt das Nockenfolgeglied 26 vom Nockenbahnteil 32 auf den Nockenbahnteil 31, so daß das Umlenkelement E in die Entlastungsstellung 20^{I} bewegt wird. Der weitere Garnabschnitt nimmt die strichpunktiert angedeutete Lage ein und wird zumindest teilweise entspannt. Der Knüpferhaken 8 bildet einen Knoten, wobei beide freie Garnenden in der Halterung 14 festgehalten bleiben. Der Knoten wird vom Knüpferhaken 8 abgeschoben, wobei die Halterung 14 so bewegt wird, daß das Messer 15 die Garnteile 9 und 9a trennt. Der Knoten wird durch die im Garn vorhandene Spannung festgezogen und fällt auf den Großballen G, der daraufhin ausgeschoben wird. Das neue, freie Garnende des Teils 9a bleibt in der Halterung 14. Das Nockenfolgeglied 26 gelangt wieder auf den Nockenbahnteil 32. Währenddessen wird ein neuer Großballen G begonnen, der wieder eine Garnschlaufe D bildet. Der weitere Garnabschnitt 10 wird wieder ausgelenkt. Dann laufen die vorbeschriebenen Vorgänge erneut ab.

Es wäre auch denkbar, für das Umlenkelement E einen eigenen Antrieb vorzusehen, z.B. einen Nockenantrieb oder einen hydraulischen oder pneumatischen Stellzylinder, der das Umlenkelement E zwischen seinen beiden Stellungen hin und herbewegt.

Bei jeder Knüpfvorrichtung Ü ist ein Umlenkelement E vorgesehen. Alle Umlenkelemente können auf der gemeinsamen Welle 22 gelagert sein, die an einer Seite der Presse P in der gezeigten Weise angetrieben wird oder in der Mitte zwischen den Knüpfvorrichtungen Ü.

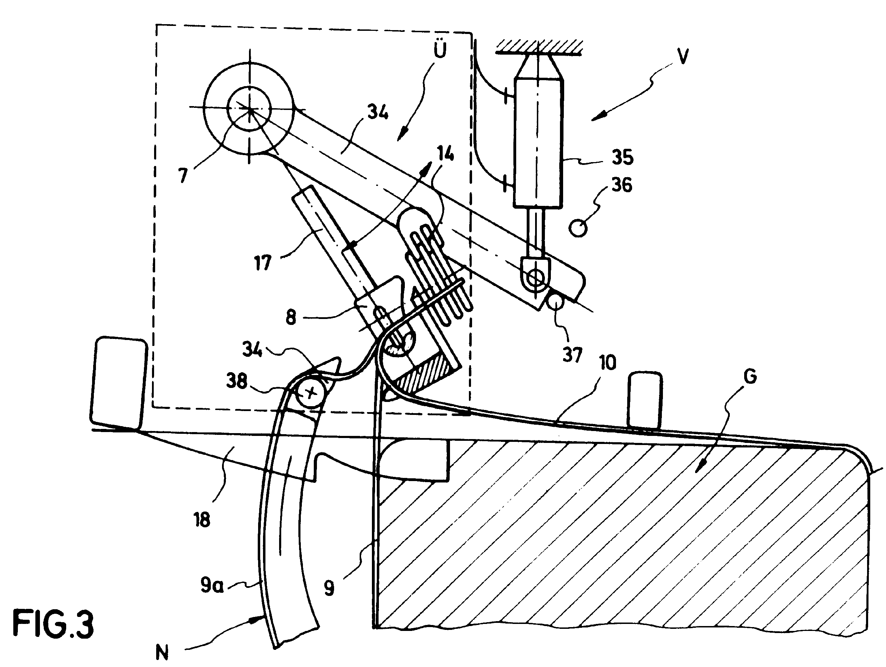

Bei der Ausführungsform gemäß Figur 3 dient die Knüpfvorrichtung Ü als die Vorrichtung V zum vorübergehenden Bilden eines Fadenvorrats im weiteren Garnabschnitt 10. Der Knüpferhaken 8 ist zusammen mit dem Messerhebel 16 und der Halterung 14 um die Antriebswelle 7 begrenzt derart verschwenkbar, daß in der gezeichneten Stellung im Garnabschnitt 10 ein Garnvorrat gebildet ist. Dazu dient ein Hebel 34, an dem ein Stellzylinder 35 angereift, mit dem der Hebel 34 zwischen zwei Anschlägen 36 und 37 hin- und herschwenkbar ist. Beim Hochschwenken bis gegen den Anschlag 36 bewegen sich die Teile der Knüpfvorrichtung Ü in Preßrichtung, so daß der Garnabschnitt 10 entlastet wird, ehe der Knoten gebildet wird. In Figur 3 ist angedeutet, wie die Zuführnadel N gerade den weiteren Teil 9 des Garns der Halterung 14 übergeben hat und sich wieder zurückbewegt, um den Teil 9a des Garns quer durch den Preßkanal K zu strecken. In der Zuführnadel N sind eine vordere Ausgabeöffnung 37 und eine Leitrolle 38 für das Garn enthalten.

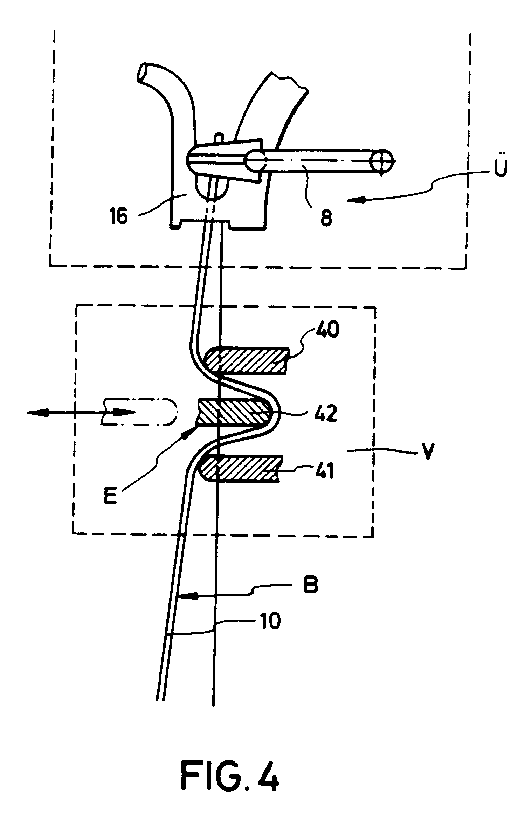

Bei der Ausführungsform gemäß Figur 4 ist die Vorrichtung V von anderer Bauart. Es ist erkennbar, wie der Messerhebel 16 unter den Knüpferhaken 8 greift. Die Vorrichtung V besteht aus zwei beabstandeten Anschlägen 40, 41, zwischen die quer zum Garn das als Schieber 42 ausgebildete Umlenkelement E einschiebbar ist, bis das Garn zick-zack-förmig umgelenkt wird, und zwar hier in horizontaler Richtung. Zum gewünschten Zeitpunkt wird der Schieber 42 zurückgezogen und der Fadenvorrat zur Verfügung gestellt. Sobald der Knoten gebildet und abgeworfen ist und der nächste Großballen beginnt, den Garnabschnitt 10 neu auszuziehen, wird der Schieber 42 in die dargestellte Position gebracht. Die Anschläge 40, 41 können stationär sein. Es ist aber auch denkbar, die Anschläge 40, 41 gegensinnig zum Schieber 42 und simultan mit diesem zu bewegen, um einen möglichst großen Garnvorrat zu bilden.

Statt wie in Figur 3 die Knüpfvorrichtung Ü um die Antriebswelle 7 zu verschwenken, wäre es auch denkbar, die Knüpfvorrichtung Ü annähernd in Preßrichtung geradlinig hin- und herzufahren, um den Fadenvorrat zu bilden.

Speziell die Ausführungsform gemäß Figur 2 ist für eine nachträgliche Umrüstung bereits im Betrieb gewesener Großballenpressen geeignet, weil bisher verwendete Komponenten ohne nennenswerte Modifikationen weiterbenutzt werden können. Es ist nur erforderlich, eine allen Umlenkelementen E gemeinsame Welle 22 bei den Knüpfvorrichtungen Ü zu lagern, die Nockenscheibe 30 an einer geeigneten Stelle auf der Antriebswelle 7 anzubringen und die Lenkverbindung 24, 25, 26, 27, 28 mit den Federn 33 einzubauen.

## Patentansprüche

1. Großballenpresse (P) für Stroh, Heu oder anderes Futtergut, mit einem Preßkanal (K), in dem der Großballen (G) in wenigstens eine Garnschlaufe (D) eingeknüpft wird, wobei sich das Garn vor dem Verknüpfen von einem Vorrat an einer Seite des Preßkanals (K) durch eine beweglich gelagerte Zuführnadel (N) und im Preßkanal (K) entlang einer Längsseite des Großballens (G), ferner um die in Preßrichtung vordere Stirnseite des Großballens (G) und mit einem weiteren Garnabschnitt (10) bis zu einer an der anderen Seite des Preßkanals (K) angeordneten gabelartigen Messerhebel (16), eine Garnhalterung (14) und einen Knüpferhaken (8) aufweisenden Knüpfvorrichtung (Ü) erstreckt, der das andere Garnende mittels der Zuführnadel (N) über die hintere Stirnseite des Großballens (G) hinweg zuführbar ist, mit einem Antrieb für die Knüpfvorrichtung (Ü) und die Zuführnadel (N), und mit einer Vorrichtung (V) zum vorübergehenden Bilden eines Garnvorrats innerhalb des weiteren Garnabschnitts (10), die mit einem Stellantrieb zwischen einer Entlastungsstellung und einer garnvorratsbildenden Stellung hin- und herbewegbar ist, **dadurch gekennzeichnet,** daß die Vorrichtung (V) zum vorübergehenden Bilden des Garnvorrats derart beweglich angeordnet ist, daß der Messerhebel (16) zwischen der Entlastungsstellung und der vorratsbildenden Stellung der Vorrichtung (V) eine permanente Führung und Abstützung für den weiteren Garnabschnitt (10) bildet.

2. Großballenpresse nach Anspruch 1, **dadurch** **gekennzeichnet,** daß die Vorrichtung (V) an der der Zuführnadel (N) abgewandten Seite des Knüpferhakens (8) und des Messerhebels (16) ein zwischen der Entlastungsstellung und der garnvorratsbildenden Stellung bewegliches Umlenkelement (E, 20) ausschließlich für den weiteren Garnabschnitt (10) aufweist, und daß das Umlenkelement (E, 20) bei am Messerhebel (16) geführtem und abgestütztem weiteren Garnabschnitt in der Entlastungsstellung außerhalb des Preßkanals (K) angeordnet ist, und in der vorratsbildenden Stellung in den Preßkanal (K) und in die Oberfläche des Großballens (G) eintaucht.

3. Großballenpresse nach Anspruch 1, **dadurch** **gekennzeichnet,** daß die Knüpfvorrichtung (Ü) oder zumindest deren Garnhalterung (14) mittels des Stellantriebs (35) zwischen der Entlastungsstellung, die beim Messerhebel (16) abgestütztem und geführtem weiteren Garnabschnitt (10) der Knotenbildestellung der Knüpfvorrichtung (Ü) entspricht, und der vorratsbildenden Stellung, in der im über den Messerhebel (16) geführten und abgestützten weiteren Garnabschnitt (10) der Garnvorrat gebildet ist, hin- und herbeweglich angeordnet ist und die garnvorratsbildende Vorrichtung (V) bildet.

4. Großballenpresse nach den Ansprüchen 1 und 2, **dadurch** **gekennzeichnet,** daß im Preßkanal (K) ein in die Oberfläche des Großballens (G) eindringender, in Preßrichtung verlaufender Nut-Formkanal (18) vorgesehen ist, und daß das Umlenkelement (E, 20) unter Mitnahme des Garns im weiteren Garnabschnitt (10) in den Nut-Formkanal (18) hinein bewegbar ist.

5. Großballenpresse nach Anspruch 4, **dadurch** **gekennzeichnet,** daß der Nut-Formkanal (18) zum Großballen (G) hin offen ausgebildet ist und innen einen Halmgut-Abweiser (19) aufweist.

6. Großballenpresse nach Anspruch 3, **dadurch** **gekennzeichnet,** daß die Knüpfvorrichtung (Ü) in Richtung des Garns im weiteren Garnabschnitt (10) verschiebbar ist.

7. Großballenpresse nach Anspruch 3, **dadurch** **gekennzeichnet,** daß die Knüpfvorrichtung (Ü) oder zumindest die Garnhalterung (14) um eine stationäre Achse, vorzugsweise eine Antriebswelle (7), verschwenkbar ist.

8. Großballenpresse nach den Ansprüchen 3, 6 und 7, **dadurch gekennzeichnet,** daß der Stellantrieb (35) für die Knüpfvorrichtung (Ü) bzw. die Garnhalterung (14) ein pneumatischer oder hydraulischer Stellzylinder ist, der an der Knüpfvorrichtung (Ü) bzw. der Garnhalterung (14) angreift.

9. Großballenpresse nach Anspruch 3, **dadurch** **gekennzeichnet,** daß zur Begrenzung des Bewegungsbereiches der Knüpfvorrichtung (Ü), vorzugsweise einstellbare, Anschläge (36, 37) vorgesehen sind.

10. Großballenpresse nach Anspruch 1, **dadurch** **gekennzeichnet,** daß zwei in Richtung des Garns im weiteren Garnabschnitt (10) beabstandete Garnanschläge (40, 41) und ein quer zwischen die Garnanschläge (40, 41) bewegbarer Schieber (42) vorgesehen sind.

11. Großballenpresse nach Anspruch 10, **dadurch** **gekennzeichnet,** daß die Garnanschläge (40, 41) und der Schieber (42) zueinander gegensinnig und quer zur Garnrichtung im weiteren Garnabschnitt (10) bewegbar sind.

## Claims

1. Large bale press (P) for straw, hay or other fodder material, including a press passage (K), in which the large bale (G) is tied-up with at least one loop of yarn (D), the yarn extending, prior to tying, from a reservoir on one side of the press passage (K) through a displaceably mounted feed needle (N) and in the press passage (K) along a longitudinal side of the large bale (G), additionally around the front end face of the large bale (G), when viewed with respect to the pressing direction, and, with an additional yarn portion (10), up to a knotting arrangement (Ü) having a bifurcated cutter lever (16), which is disposed on the other side of the press passage (K), a yarn holder (14) and a knotting hook (8), to which knotting arrangement the other end of the yarn is feedable by means of the feed needle (N) beyond the rear end face of the large bale (G), said large bale press including a drive for the knotting arrangement (Ü) and the feed needle (N), and an arrangement (V) for the temporary formation of spare yarn internally of the additional yarn portion (10), which arrangement is reciprocatable with an operating drive between a tension-relieving position and a spare yarn forming position, characterised in that the arrangement (V) for the temporary formation of spare yarn is so displaceably disposed that the cutter lever (16) between the tension-relieving position and the spare yarn forming position of the arrangement (V ) forms a permanent guide and support means for the additional yarn portion (10).

2. Large bale press according to claim 1, characterised in that the arrangement (V) is provided, on the side of the knotting hook (8) and of the cutter lever (16) remote from the feed needle (N), with a deflection member (E, 20), which is displaceable between the tension-relieving position and the spare yarn forming position, exclusively for the additional yarn portion (10), and in that the deflection member (E, 20) is disposed externally of the press passage (K) when the additional yarn portion, guided and supported on the cutter lever (16), is in the tension-relieving position, and said deflection member descends into the press passage (K) and into the surface of the large bale (G) in the spare yarn forming position.

3. Large bale press according to claim 1, characterised in that the knotting arrangement (Ü), or at least its yarn holder (14), is reciprocatingly disposed, by means of the operating drive (35), between the tension-relieving position, which corresponds to the knot-forming position of the knotting arrangement (Ü) when the additional yarn portion (10) is supported and guided on the cutter lever (16), and the spare yarn forming position, in which the spare yarn is formed in the additional yarn portion (10), which is guided and supported via the cutter lever (16), and said knotting arrangement forms the spare yarn forming arrangement (V).

4. Large bale press according to claims 1 and 2, characterised in that a groove-like channel (18), which penetrates the surface of the large bale (G) and extends in the pressing direction, is provided in the press passage (K), and in that the deflection member (E, 20) is displaceable into the groove-like channel (18) whilst entraining the yarn in the additional yarn portion (10).

5. Large bale press according to claim 4, characterised in that the groove-like channel (18) is adapted to be open towards the large bale (G) and is provided internally with a stalk material deflector (19).

6. Large bale press according to claim 3, characterised in that the knotting arrangement (Ü) is displaceable in the direction of the yarn in the additional yarn portion (10).

7. Large bale press according to claim 3, characterised in that the knotting arrangement (Ü), or at least the yarn holder (14), is pivotable about a stationary axle, preferably a drive shaft (7).

8. Large bale press according to claims 3, 6 and 7, characterised in that the operating drive (35) for the knotting arrangement (Ü), or the yarn holder (14) respectively, is a pneumatic or hydraulic operating cylinder which co-operates with the knotting arrangement (Ü), or the yarn holder (14) respectively.

9. Large bale press according to claim 3, characterised in that stop members (36, 37), which are preferably adjustable, are provided to limit the range of movement of the knotting arrangement (Ü).

10. Large bale press according to claim 1, characterised in that two yarn stop members (40, 41), which are spaced apart when viewed with respect to the direction of the yarn in the additional yarn portion (10), and a slider (42), which is displaceable transversely between the yarn stop members (40, 41), are provided.

11. Large bale press according to claim 10, characterised in that the yarn stop members (40, 41) and the slider (42) are displaceable in opposite directions to one another and transversely relative to the direction of the yarn in the additional yarn portion (10).

## Revendications

1. Presse pour grandes balles (P) pour de la paille, du foin ou d'autres matières de fourrage, comprenant un conduit presseur (K), dans lequel la grande balle (G) est liée dans au moins une boucle de fil (D), le fil, avant le liage s'étendant depuis une réserve sur un côté du conduit presseur (K) à travers une aiguille d'amenée (N) montée mobile et dans le conduit presseur (K) le long d'un côté longitudinal de la grande balle (G), ensuite autour du côté frontal, avant dans la direction de compression, de la grande balle (G) et avec un tronçon ultérieur de fil (10) jusqu'à un dispositif de liage (Ü) disposé de l'autre côté du conduit presseur (K), présentant un levier à lame (16) en forme de fourche, un support de fil (14) et un crochet de liage (8), dispositif de liage (Ü) auquel l'autre extrémité de fil peut être amenée au moyen de l'aiguille d'amenée (N) par dessus le côté frontal arrière de la grande balle (G), avec un entraînement pour le dispositif de liage (Ü) et l'aiguille d'amenée (N), et avec un dispositif (V) pour former temporairement une réserve de fil à l'intérieur du tronçon ultérieur de fil (10), qui peut être déplacé suivant un mouvement de va-et-vient par une commande de réglage entre une position de décharge et une position formant une réserve de fil, caractérisée en ce que le dispositif (V) pour former temporairement la réserve de fil est disposé avec une telle mobilité que le levier à lame (16), entre la position de décharge et la position formant la réserve du dispositif ( V ), constitue un guidage et un support permanents pour le tronçon ultérieur de fil (10).

2. Presse pour grandes balles selon la revendication 1, caractérisée en ce que le dispositif (V) présente sur le côté, éloigné de l'aiguille d'amenée (N), du crochet de liage (8) et du levier à lame (16) un élément de déviation (E, 20) déplaçable entre la position de décharge et la position formant la réserve de fil exclusivement pour le tronçon ultérieur de fil (10), et en ce que l'élément de déviation (E, 20), lorsque le tronçon ultérieur de fil se trouve dans la position de décharge guidé et supporté par le levier à lame (16), est disposé à l'extérieur du conduit presseur (K) et, dans la position formant la réserve, plonge dans le conduit presseur (K) et dans la surface de la grande balle (G).

3. Presse pour grandes balles selon la revendication 1, caractérisée en ce que le dispositif de liage Ü ou au moins le support de fil (14) de celui-ci est disposé pour effectuer un mouvement de va-et-vient au moyen de la commande de réglage (35) entre la position de décharge qui correspond, lorsque le tronçon ultérieur de fil 10 prend appui et est guidé par le levier à lame (16), à la position de formation de noeuds du dispositif de liage (Ü), et la position formant la réserve dans laquelle est formée la réserve de fil dans le tronçon ultérieur de fil (10) guidé et prenant appui sur le levier à lame (16), et constitue le dispositif (V) formant la réserve de fil.

4. Presse pour grandes balles selon les revendications 1 et 2, caractérisée en ce qu'il est prévu dans le conduit presseur (K) un canal formant des rainures (18) pénétrant dans la surface de la grande balle (G) et s'étendant dans la direction de compression, et en ce que l'élément de déviation (E 20), en entraînant le fil dans le tronçon ultérieur de fil (10), peut être introduit dans le canal formant les rainures (18).

5. Presse pour grandes balles selon la revendication 4, caractérisée en ce que le canal formant les rainures (18) est réalisé ouvert vers la grande balle (G) et présente à l'intérieur un déflecteur (19) de matière de paille.

6. Presse pour grandes balles selon la revendication 3, caractérisée en ce que le dispositif de liage (Ü) peut être déplacé en direction du fil dans le tronçon ultérieur de fil (10).

7. Presse pour grandes balles selon la revendication 3, caractérisée en ce qu'on peut faire pivoter le dispositif de liage (Ü) ou au moins le support de fils (14) autour d'un axe stationnaire, de préférence un arbre d'entraînement (7).

8. Presse pour grandes balles selon les revendications 3, 6 et 7, caractérisée en ce que la commande de réglage (35) pour le dispositif de liage (Ü) et le support de fils (14), respectivement, est un cylindre de réglage pneumatique ou hydraulique qui vient en prise avec le dispositif de liage (Ü) et le support de fil (14), respectivement.

9. Presse pour grandes balles selon la revendication 3, caractérisée en ce que des butées (36, 37), de préférence réglables, sont prévues pour délimiter la zone de déplacement du dispositif de liage (Ü).

10. Presse pour grandes balles selon la revendication 1, caractérisée en ce que sont prévues deux butées de fil (40, 41) placées à une certaine distance dans la direction du fil dans le tronçon ultérieur de fil (10), et un coulisseau (42) déplaçable transversalement entre les butées de fil (40, 41).

11. Presse pour grandes balles selon la revendication 10, caractérisée en ce que les butées de fil (40, 41) et le coulisseau (42) peuvent être déplacés en sens inverse et transversalement à la direction du fil dans le tronçon ultérieur de fil (10).
